# EUROPEAN PATENT APPLICATION

(11) **EP 1 850 282 A1**
(43) Date of publication of application: **31.10.2007**
(21) Application number: 07008541.0
(22) Date of filing: 26.04.2007
(51) Int. Cl.: G06Q 10/00

(54) **Method and system for generating and employing a web services client extensions model**

(30) Priority: 28.04.2006 US 413809
(71) Applicant: SAP AG, 69190 Walldorf (DE)
(72) Inventor: Baikov, Chavdar S., Sofia 1330 (BG)
(74) Representative: Müller-Boré & Partner Patentanwälte

(57) **Abstract**

A system and method are provided to generate an enhanced configuration model. In one embodiment, application programming interfaces (APIs) are identified. The APIs relate to web services and/or web services clients. Access to the APIs is provides via a configuration model.

## Description

### FIELD

Embodiments of the invention generally relate to the field of web services. More particularly, the embodiments of the invention relate to generating and providing a web services client extensions model.

### BACKGROUND

Efforts are being made to more easily conduct business in a web-based environment. "Web Services" is loosely understood to mean the ability to discover and conduct business in a web-based environment. For example, a user (e.g., a web-based application or person with a web browser) may: 1) search through an online registry of businesses and/or services; 2) find a listing in the registry for web based access to a service that that the user desires to have performed; and then, 3) engage in a web based business relationship with the service application including the passing of relevant information (e.g., pricing, terms, and conditions) over the network. In other words, web services generally refer to offerings of services by one application to another via the World Wide Web.

Given the nature and use of web services and the rapid increase in their demand, interoperability of web services across clients and servers is becoming increasingly important and cumbersome. Some attempts have been made to achieve interoperability across a wide range of platforms and runtimes. For example, using open standards like extensible Markup Language (XML), Simple Object Access Protocol (SOAP), Web Services Description Language (WSDL), and Universal Description, Discovery, and Integration (UDDI), some interoperability has been achieved.

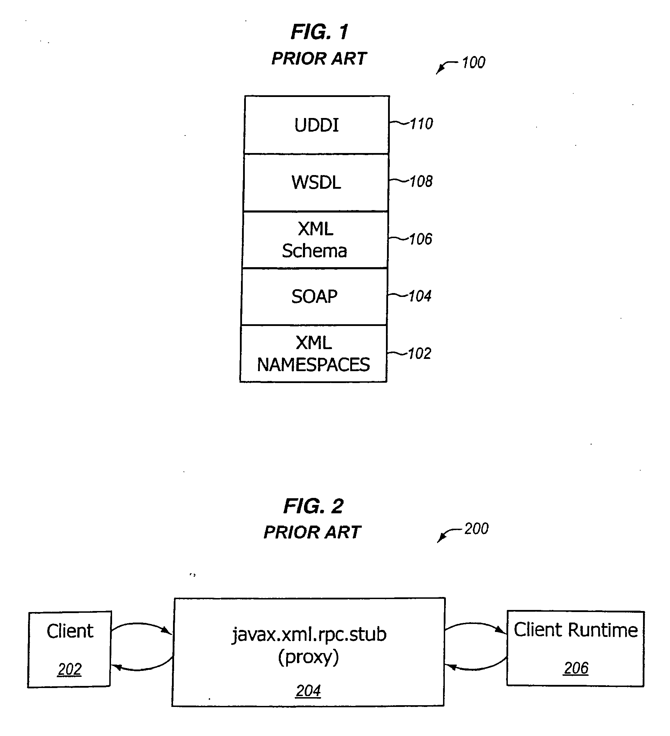

**Figure 1** illustrates a prior art web services platform 100. The platform 100 shows various XML-related standards 102-110 that are used in connection with web services to attempt interoperability. The illustrated standards include XML Namespaces 102, similar to Java package names, to provide syntax for data representation in portable format. SOAP 104 refers to a standard packaging format for transmitting XML data between applications over a network. XML schema 106 refers to the World Wide Web Consortium (W3C) schema specification for XML documents. WSDL 108 refers to the standard used for describing the structure of XML data that is exchanged between systems using SOAP 104. Finally, UDDI 110 refers to a standard SOAP-based interface for web services registry and defines a set of web services operations and methods that are used to store and search information regarding web services applications.

However, the open standards are not evolving fast enough to keep up with the increasing demand for web services and needs of additional flexibility and control on the client-side. One of the problems today is the convoluted relationships and mappings between relevant standards. With conventional web services modeling applications and tools, neither the interoperability nor the client-side flexibility are sufficiently achieved because of the limitation in use of web services metadata and conventional separation of standards, models, and entities for web services (WS) and web services client (WSC). For example, Java application programming interface (API) for Extensible Markup Language (XML)-based Remote Procedure Call (RPC) (JAX-RPC), such as JAX-RPC 1.1, does not provide for loading and describing of dynamic web services interfaces, data access, and object manipulation. Furthermore, its metadata hides important web service details and is not suitable for building specialised web service applications.

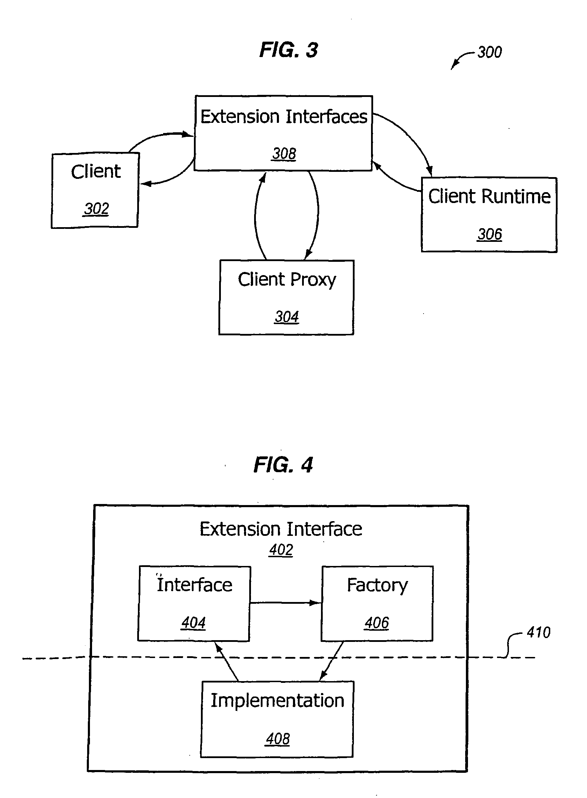

**Figure 2** illustrates a prior art standard programming model 200. For web service consumers, standard programming model (standard model) 200 includes a JAX-RPC stub configuration model which uses a Java JAX-RPC. Although standard model 200 provides an API 204 (e.g., jax-rpc client API), the applications are limited in terms of the control they have over client runtime 206 and client runtime extensions. Further, standard model 200 is based on JAX-RPC 1.1 using *javax.xml.rpc.Stub* 204 interface for configuring proxy properties. Although standard model 200 provides methods via API 204 to allow client 204 to set proxy properties (e.g., *javax.xml.rpc.security.auth.username* for user name for authentication), it is limited in use as these properties are default or standard properties and do not provide any plug-in-specific APIs or client-specific client extensions. Being limited only to such properties, standard model 200 is incapable of handling additional or non-standard client properties that are not only client-friendly, but also they are becoming increasingly important for more conveniently invoking web services.

### SUMMARY

A system and method are provided to generate an enhanced configuration model. In one embodiment, application programming interfaces (APIs) are identified. The APIs relate to web services and/or web services clients. Access to the APIs is provides via a configuration model.

The above attributes may be implemented using a computer program, a method, a system or apparatus, or any combination of computer programs, methods, or systems. These and other details of one or more embodiments of the invention are set forth in the accompanying drawings and in the description below.

### BRIEF DESCRIPTION OF THE DRAWINGS

The invention is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

**Figure 1** illustrates a prior art web services platform.

**Figure 2** illustrates a prior art standard programming model.

**Figure 3** illustrates an embodiment of an enhanced configuration model.

**Figure 4** illustrates an embodiment of an extension interface.

**Figure 5** illustrates an embodiment of a model building mechanism for building an enhanced configuration model.

**Figure 6** illustrates an embodiment of a process for generating an enhanced configuration model.

**Figure 7** illustrates a computing system.

**Figure 8** illustrates a client/server network system.

### DETAILED DESCRIPTION

As used herein, references to one or more "embodiments" are understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive. Descriptions of certain details and implementations follow, including a description of the figures, which may depict some or all of the embodiments described below, as well as discussing other potential embodiments or implementations of the inventive concepts presented herein.

**Figure 3** illustrates an embodiment of an enhanced configuration model 300. In one embodiment, enhanced configuration model (extension model) 300 is provided to extent a client programming model by providing plug-in-specific APIs (e.g., client runtime plug-ins). In one embodiment, extension model 300 includes client 302 and client runtime 306 in communication with extension interfaces 308 further in communication with client proxy 304. As illustrated, client proxy 304 is further in communication with client runtime 306. Extension interfaces 308 include and expose various APIs such that to allow the framework plug-ins to expose their APIs. For example, these APIs are exposed to client 302 such that the application developer or administrator can access the APIs. In one embodiment, the term "framework plug-ins" here refers to various protocols, including various message processing and transmission protocols, such as Web Services Reliable Messaging (WSRM), Security, SOAP Header protocol, Transport binding, and the like.

In one embodiment, extension model 300 includes extension interfaces 308 that serve as a convenient API for setting additional client settings and for providing additional client APIs that are in addition to merely the basic client properties. This mechanism allows for setting up of the WS client more convenient and developer-friendly. By providing a homogenous and client-independent and WS-independent extension interface via extension interfaces 308, the need for different client setups is eliminated. For example, an extension API 308 can be used with various types of WS clients (e.g., dynamic client, JAX-RPC client, etc.) as the extension API 308 is WS client-independent and can be used regardless of the type of the WS client. In one embodiment, extension interfaces 308 are generated by defining and providing various APIs needed to configure various WS clients such that there is not longer the need to provide specific settings (e.g., security settings) for each of the WS client. In one embodiment, client proxy 304 may be used in communication with extension interfaces 308, but not necessarily used directly.

In one embodiment, extension interfaces 308 at extension model 300 provide client runtime functionalities, via APIs, that are used by consumer application developers via client 302. The components of these extension APIs are represented by an extension interface name, a factory name, and interface methods. The usage may also be included for clarity. Examples of such extension APIs include an SOAP header interface, a session interface, a HyperText Transfer Protocol (HTTP) control interface, a WS security interface, etc.

For example, the SOAP header API is provided for setting and getting SOAP headers by consumer applications. Methods for getting headers can be invoked after an operation call, while the setting of output headers is done before the operation call. As mentioned previously, the components of this SOAP header API may be represented by an extension interface name (e.g., *com.sap.engine.services.webservices.espbase.client.api.SOAPHeaderInterface,* etc.), a factory class name (e.g., *com.sap.engine.services.webservices.espbase.client.api.SOAPHeaderFactory,* etc.), and interface methods (e.g., *java.lang.Object getInputHeade(javax.xml. namespace.QName headerName, ClassheaderType) throws UnmarshalException* for returning response SOAP Header using deserialization framework, etc.).

The session interfaces is provided to manage HTTP sessions when using web services that support "cookie" sessions. As with SOAP header API, the components of the session API are also represented by an extension interface name (e.g., *com.sap.engine.services.webservices.espbase.client.api.SessionInterface,* etc.), a factory class name (e.g., *com.sap.engine.services.webservices.espbase.client.api.SessionInterfaceFactory,* etc), and various interface methods. HTTP control interface provides fine control over some HTTP connection properties that web services clients use to access web services. The components of the HTTP control interface are represented by an extension interface name, a factory class name, and interface methods. The WS security interface is used to provide security settings for WS clients. As with the other interfaces mentioned here as examples, the components of the WS security API are also represented via an extension interface name, a factory class name, and interface methods.

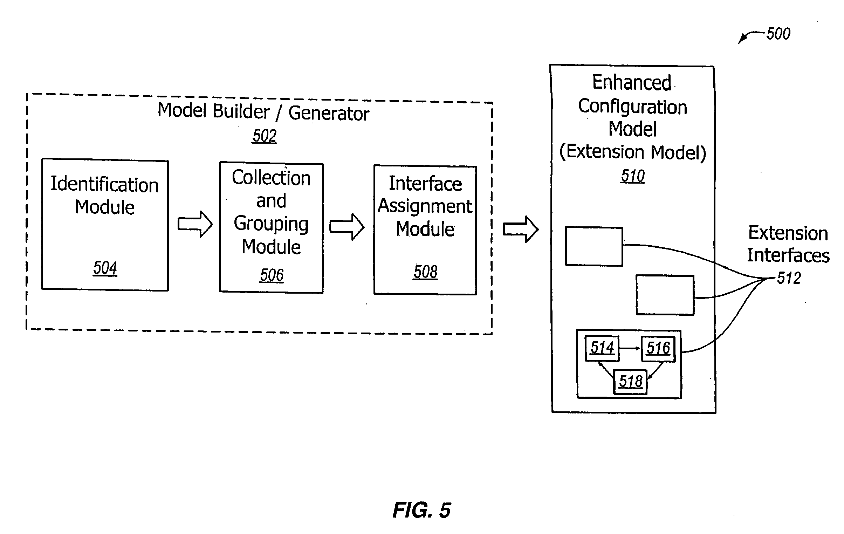

**Figure 4** illustrates an embodiment of an extension interface 408. The illustrated extension interface 402 refers to one of extension interfaces provided via the extension model as illustrated in **Figure 3**. In one embodiment, each extension interface 402 provides enhanced functionalities by providing the following components: (1) static factory class 406; (2) public interface 404; and (3) interface implementation 408. Static factory class 406 provides implementation instances of extension interface 402. The implementation classes are stateful and relate to the port (stub) instance and thus, when creating a new extension interface instance, a port instance the developer uses may be provided. The method for creating such interface instance includes a static method in factory 406 with a signature, such as *public static [PublicInterface] newInstance(java.lang.Object port).* An additional reuse method in factory 406 presents, for example, the following: *public static void reuse([PublicInterface] apiInterface).*

Extension interface 402 further provides a public interface 404 that contains the methods and APIs provided to the consumer developer via the client extension. Furthermore, interface implementation provides implementation class 408 for extension interface 402. The instances of implementation class 408 are associated with specific port instantiated by the consumer application. Once the job with the specific port is completed, the extension instance may not be needed anymore.

The illustrated extension interface structure 402 suggests a tight integration of factory class 406 and implementation class 408 to the WS Client framework and further coupled to interface 404. Factory class 406 is used to create instances of implementation class 408 to provide implementation of interface 404. Interface 404 may include a Java interface to allow the developer to, via a client, access the additional APIs that are provided via extension interface 402. Extension interface 402 represents one or more groups of APIs. In one embodiment, components 404, 406 above the dotted line 410 are made visible to the client, while implementation class 408 may remain internal.

**Figure 5** illustrates an embodiment of a model building mechanism 500 for building an enhanced configuration model 508. The illustrated mechanism 500 includes model builder or generator 502 that provides various modules 504, 506, 508 to generate extension model 508. For example, model generator 502 includes identification module 504 to identify various web services client functionalities. Collection and grouping module 506 collects such functionalities and groups them in various groups. Interface assignment module 508 assigns an extension interface 510 to each of the groups such that each group is represented by a single extension interface 510. Using model generator 502 having modules 504, 506, 508, extension model 508 is generated to provide various extension interfaces 510 and access to such extension interfaces 510. Each extension interface 510 includes an interface 512, a factory class 514, and an implementation class 516.

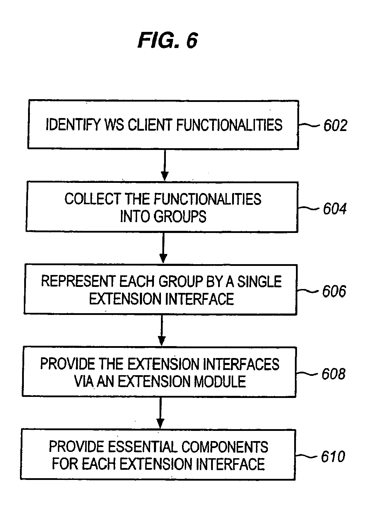

**Figure 6** illustrates an embodiment of a process for generating an enhanced configuration model. At processing block 602, various web services functionalities are identified. At processing block 604, the identified web services functionalities are collected and grouped into groups. Each group is then assigned an extension interface such that each group is represented by a single extension interface at processing block 606. At processing block 608, the extension interfaces are then provided via the extension model. Each extension interface represents an API to be access by the developer via a client. Further, each extension interface provides essential components, such as a public interface (e.g., Java interface), a factory class, and an implementation class at processing block 610.

In one embodiment, to perform various embodiments of the present invention, a server or node (e.g., J2EE server) is employed, which supports Enterprise Java Bean ("EJB") components and EJB containers (at the business layer) and Servlets and Java Server Pages ("JSP") (at the presentation layer). A virtual machine (VM) may include a Java virtual machine (JVM) to host the server or server node. It is understood that processes taught by the discussion above can be practiced within various software environments such as, for example, object-oriented and non-object-oriented programming environments, Java based environments (such as a J2EE environment or environments defined by other releases of the Java standard), other environments (e.g., a .NET environment, a Windows/NT environment each provided by Microsoft Corporation), and the like.

Processes taught by the discussion above may be performed with program code, such as machine-executable instructions, which can cause a machine (such as a "virtual machine", a general-purpose processor disposed on a semiconductor chip, a special-purpose processor disposed on a semiconductor chip, etc.) to perform certain functions. Alternatively, these functions may be performed by specific hardware components that contain hardwired logic for performing the functions, or by any combination of programmed computer components and custom hardware components.

One or more modules within or associated with an enhanced configuration model (such as the enhanced configuration model 300 of **Figure 3**) and its extension APIs, and a model generator (such as the model generator 502 of Figure 5) and its models, components and other elements may include hardware, software, and a combination thereof. In a case where a module includes software, the software data, instructions, and/or configuration may be provided via an article of manufacture by a machine/electronic device/hardware. An article of manufacture may include a machine accessible/readable medium having content to provide instructions, data, etc. The content may result in an electronic device, for example, a filer, a disk, or a disk controller as described herein, performing various operations or executions described. A machine accessible medium includes any mechanism that provides (i.e., stores and/or transmits) information/content in a form accessible by a machine (e.g., computing device, electronic device, electronic system/subsystem, etc.). For example, a machine accessible medium includes recordable/non-recordable media (e.g., read only memory (ROM), random access memory (RAM), magnetic disk storage media, optical storage media, flash memory devices, etc.), as well as electrical, optical, acoustical or other form of propagated signals (e.g., carrier waves, infrared signals, digital signals, etc.), etc. The machine accessible medium may further include an electronic device having code loaded on a storage that may be executed when the electronic device is in operation. Thus, delivering an electronic device with such code may be understood as providing the article of manufacture with such content described above. Furthermore, storing code on a database or other memory location and offering the code for download over a communication medium via a propagated signal may be understood as providing the article of manufacture with such content described above. The code may also be downloaded from a remote computer (e.g., a server) to a requesting computer (e.g., a client) by way of data signals embodied in a propagation medium (e.g., via a communication link (e.g., a network connection)).

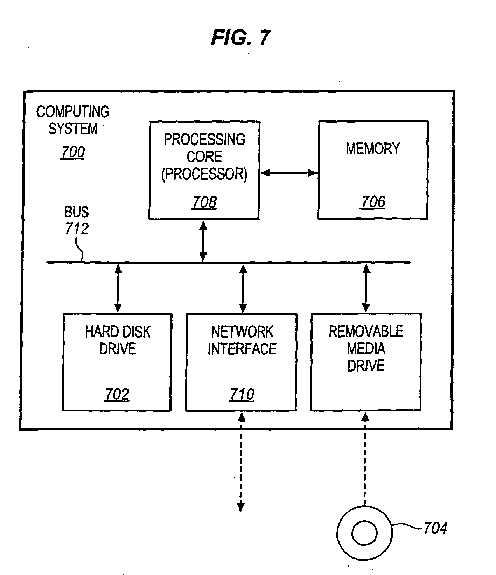

**Figure 7** illustrates a computing system 700. Computing system 700 may be used for implementing one or more embodiments of the present invention and for executing program code stored by an article of manufacture. It is important to recognize that the computing system 700 represents merely of various computing system architectures that can be used for the same purposes. The applicable article of manufacture may include one or more fixed components (such as hard disk drive 702 or memory 706) and/or various movable components, such as compact disk (CD) ROM 704, a compact disc, a magnetic tape, and the like. To execute the program code, typically instructions of the program code are loaded into RAM 706. Then, processing core 708 executes the instructions. A processing core may include one or more processors and a memory controller function. A virtual machine or "interpreter" (e.g., a JVM) may run on top of the processing core (architecturally speaking) to convert abstract code (e.g., Java bytecode) into instructions that are understandable to the specific processor(s) of processing core 708. Computing system 700 further includes network interface 710 and bus 712 to connect to other systems via a network and to have various components communicate with each other, respectively.

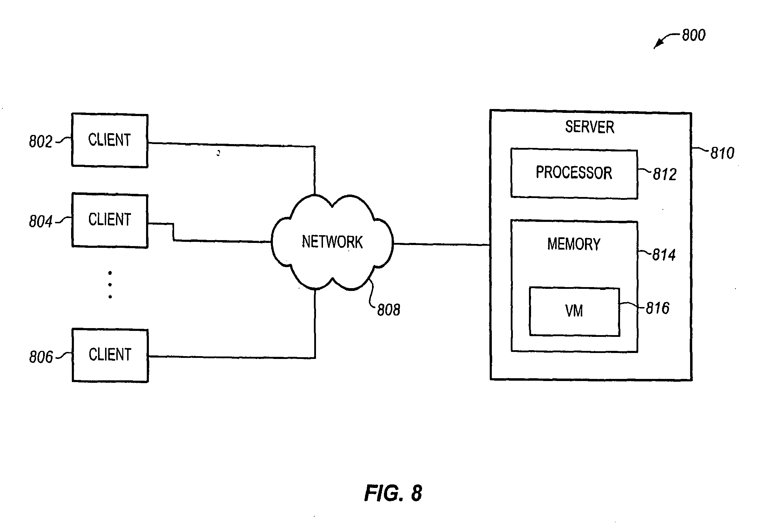

**Figure 8** illustrates a client/server network system 800. As illustrated, network 808 links server 810 with client systems 802-806. Server 810 includes programming data processing system suitable for implementing apparatus, programs, and/or methods in accordance with one or more embodiments of the present invention. Server 810 includes processor 812 and memory 814. Server 810 provides a core operating environment for one or more runtime systems (e.g., VM 816) at memory 814 to process user requests. Memory 814 may include a shared memory area that is accessible by multiple operating system processes executing in server 810. For example, VM 816 may include an enterprise server (e.g., a J2EE-compatible server or node, Web Application Server developed by SAP AG, WebSphere Application Server developed by IBM Corp. of Armonk, NY, and the like). Memory 814 can be used to store an operating system, a Transmission Control Protocol/lnternet Protocol (TCP/IP) stack for communicating over network 808, and machine executable instructions executed by processor 812. In some embodiments, server 810 may include multiple processors, each of which can be used to execute machine executable instructions.

Client systems 802-806 may execute multiple application or application interfaces. Each instance or application or application interface may constitute a user session. Each user session may generate one or more requests to be processed by server 810. The requests may include instructions or code to be executed on a runtime system, such as VM 816, on server 810 and its components and modules as described throughout this document.

In addition to what is described herein, various modifications may be made to the disclosed embodiments and implementations of the invention without departing from their scope. Therefore, the illustrations and examples herein should be construed in an illustrative, and not a restrictive sense. The scope of the invention should be measured solely by reference to the claims that follow.

## Claims

1. A method comprising:
identifying application programming interfaces (APIs), the APIs relating to one or more of web services and web services clients; and
providing access to the APIs via a configuration model.

2. The method of claim 1, further comprising:
evaluating the web services and the web services clients; and
collecting the APIs in accordance with importance level of each of the APIs as determined by the evaluation of the web services and the web services clients.

3. The method of claim 2, further comprising grouping the APIs.

4. The method of claim 2 or 3, further comprising:
generating the configuration model, the configuration model including generic components; and
extending the configuration model to include the APIs.

5. The method of any one of the preceding claims, wherein the providing access to the APIs comprises collectively providing access to the APIs via the configuration model via a client.

6. The method of any one of the preceding claims, wherein each of the APIs comprises one or more of a Java interface, a factory class, and an implementation class.

7. The method of any one of the preceding claims, further comprising associating the APIs with one or more of a web services client proxy and a web services client runtime proxy.

8. The method of any one of the preceding claims, further comprising associating the APIs with the client.

9. A system comprising:
an identification module to identify application programming interfaces (APIs), the APIs relating to one or more of web services and web services clients; and
a generic interface to provide access to the APIs via a configuration model.

10. The system of claim 9, further comprising:
an evaluation module to evaluate the web services and the web services clients; and
a collection and grouping module to collect the APIs in accordance with importance level of each of the APIs as determined by the evaluation of the web services and the web services clients.

11. The system of claim 10, wherein the collection and grouping module is further to group the APIs.

12. The system of claim 10 or 11, further comprising:
a model generator to
generate the configuration model, the configuration model including generic components, and
extend the configuration model to include the APIs.

13. The system of any one of claims 9 to 12, wherein the generic interface is further to collectively provide access to the APIs via the configuration model via a client.

14. The system of any one of claims 9 to 13, wherein each of the APIs comprises one or more of a Java interface, a factory class, and an implementation class.

15. An apparatus comprising:
means for identifying application programming interfaces (APIs), the APIs relating to one or more of web services and web services clients; and
means for providing access to the APIs via a configuration model.

16. The apparatus of claim 15, further comprising:
means for evaluating the web services and the web services clients; and
means for collecting the APIs in accordance with importance level of each of the APIs as determined by the evaluation of the web services and the web services clients.

17. An article of manufacture comprising a machine-accessible medium having instructions which when executed cause a machine to:
identify application programming interfaces (APIs), the APIs relating to one or more of web services and web services clients; and
provide access to the APIs via a configuration model.

18. The article of manufacture of claim 17, wherein the instructions which when executed further cause the machine to:
evaluate the web services and the web services clients; and
collect the APIs in accordance with importance level of each of the APIs as determined by the evaluation of the web services and the web services clients.

19. The article of manufacture of claim 18, wherein the instructions which when executed further cause the machine to group the APIs.

20. The article of manufacture of claim 18 or 19, wherein the instructions which when executed further cause the machine to:
generate the configuration model, the configuration model including generic components; and
extend the configuration model to include the APIs.
